# EUROPEAN PATENT SPECIFICATION

(11) **EP 1 127 025 B1**
(45) Date of publication and mention of the grant of the patent: **14.01.2004**
(21) Application number: 99947505.6
(22) Date of filing: 06.10.1999
(51) Int. Cl.: B66B 11/08, F16D 66/02

(54) **METHOD FOR DETERMINING THE OPERATION AND CONDITION OF THE HOLDING BRAKE OF AN ELEVATOR AND HOLDING BRAKE**
VERFAHREN ZUM BESTIMMEN DER FUNKTIONSFAEHIGKEIT UND DES ZUSTANDES DER HALTEBREMSE EINES AUFZUGES UND HALTEBREMSE
PROCEDE RELATIF A LA DETERMINATION DU FONCTIONNEMENT ET DE L'ETAT DU FREIN D'ARRET D'UN ASCENSEUR, ET FREIN D'ARRET

(30) Priority: 06.10.1998 FI 982172
(43) Date of publication of application: 29.08.2001
(73) Proprietor: Kone Corporation, 00330 Helsinki (FI)
(72) Inventor: HAKALA, Harri, FIN-05860 Hyvinkää (FI); MUSTALAHTI, Jorma, FIN-05620 Hyvinkää (FI); PAJALA, Tauno, FIN-02730 Espoo (FI)
(74) Representative: Zipse + Habersack
(86) International application number: PCT/FI1999/000828
(87) International publication number: WO 2000/020320

(56) References cited:
- EP-A- 0 671 356
- DE-A- 1 630 569
- DE-A- 19 548 520
- DE-C- 4 137 737
- US-A- 3 887 040
- US-A- 4 136 634
- PATENT ABSTRACTS OF JAPAN vol. 013, no. 183 (M-820), 28 April 1989 (1989-04-28) & JP 01 012145 A (NEC HOME ELECTRONICS LTD), 17 January 1989 (1989-01-17)
- PATENT ABSTRACTS OF JAPAN vol. 016, no. 016 (M-1200), 16 January 1992 (1992-01-16) & JP 03 234936 A (MITSUBISHI HEAVY IND LTD;OTHERS: 01), 18 October 1991 (1991-10-18)

## Description

The present invention relates to a holding brake as defined in the preamble of claim 5.

In prior-art, a procedure for monitoring the condition of the holding brake of an elevator is known in which the condition of the brake pads is checked visually in conjunction with periodic servicing and the required service operations are carried out. A problem here is that, without a special service inspection, it is not possible to observe the operational state and condition of the holding brake, e.g. the degree of wear of the brake pads, during the use of the elevator to anticipate the need for servicing. From specification JP 10045357, a holding brake is known in which a sensor is embedded in the brake pad. Based on a signal given by the sensor, an alarm is activated when the degree of wear of the brake pad has reached a predetermined limit. A problem with this prior-art brake is that the sensor does not provide any information about the operational state of the brake, and no information is obtained about the degree of wear of the brake pad until the predetermined limit is reached.

The DE 195 48 520-A1 discloses a method for detecting the air gap of a brake for calculating the wear of the brake pads. The depth of the air gap is detected by means of an electromagnet which is fed with a periodically changing voltage whereby the depth of the air gap is detected as the amplitude of a periodically changing portion of current through the coil of the electromagnet.

The object of the invention is to eliminate the drawbacks referred to above.

A specific object of the invention is to disclose a holding brake which allow continuous monitoring and collection of information about the development of the degree of wear of the brake to make it possible to anticipate the actual need for servicing and avoid unnecessary service inspections. A further object of the invention is to disclose a holding brake in which both the degree of wear of the brake pad and the operational state of the brake can be monitored.

The holding brake of the invention is characterized by what is presented in claim 1.

The holding brake of the invention comprises a brake body; a brake pad; a brake shoe to which the brake pad is attached, said brake shoe being mounted on the brake body so that it can move between a braking position, in which the brake pad is in braking contact with a rotating element connected to the power unit of the elevator, and a released position, in which the brake pad is clear of contact with the rotating element; a spring arranged to apply to the brake shoe a load tending to move it to the braking position; and an electromagnetic actuator arranged to keep the brake shoe in the released position when activated.

According to the invention, the holding brake comprises a displacement sensor arranged to measure the displacement of the brake shoe between the braking position and the releasing position, and a monitoring device arranged to indicate the operational state and/or condition of the brake on the basis of the measured displacement.

According to the invention, the displacement of the brake shoe between the braking position and the releasing position is measured and, based on the measured displacement, the operational state and/or condition of the brake is indicated.

With the wear of the brake shoe, the measured displacement increases correspondingly, so the displacement value gives directly a measurement value from which the degree of wear can be deduced. By monitoring the degree of wear, the actual need for replacement of the brake pad or adjustment of the brake shoe can be established.

For a displacement corresponding to the stroke of the brake shoe, an alarm limit can be set. The same displacement sensor also indicates whether the brake is in the braking position or in the released position, and in the case of malfunction the use of the elevator can be prevented and an alarm can be issued. Using a displacement sensor, it is possible to measure very small displacements characteristic of a holding brake.

In an embodiment of the holding brake, the monitoring device has been arranged to determine the degree of wear of the brake pad on the basis of the measured displacement.

In an embodiment of the holding brake, the monitoring device has been arranged to issue an alarm and/or prevent the use of the elevator if the measured displacement exceeds a predetermined limit.

In an embodiment of the holding brake, the monitoring device has been arranged to issue and alarm and/or prevent the use of the elevator if the displacement is insufficient.

In an embodiment of the holding brake, the displacement sensor is preferably of a type working without contact. The displacement sensor may be an inductive, capacitive or optic sensor. A mechanical displacement sensor can also be used. The choice of a suitable displacement sensor is part of the skilled person's expertise, which is why the details of displacement sensors and their working principles will not be described in this presentation.

In the following, the invention will be described in detail by the aid of a few of its embodiments with reference to the drawing, wherein
Fig. 1 is a skeleton diagram of so-called traction sheave elevator,
Fig. 2 presents the power unit of the traction sheave elevator in Fig. 1, comprising an embodiment of the holding brake of the invention,
Fig. 3 presents a partially sectioned view of an embodiment of the holding brake of the invention in the released position, and
Fig. 4 shows the holding brake in Fig. 3 in the braking position.

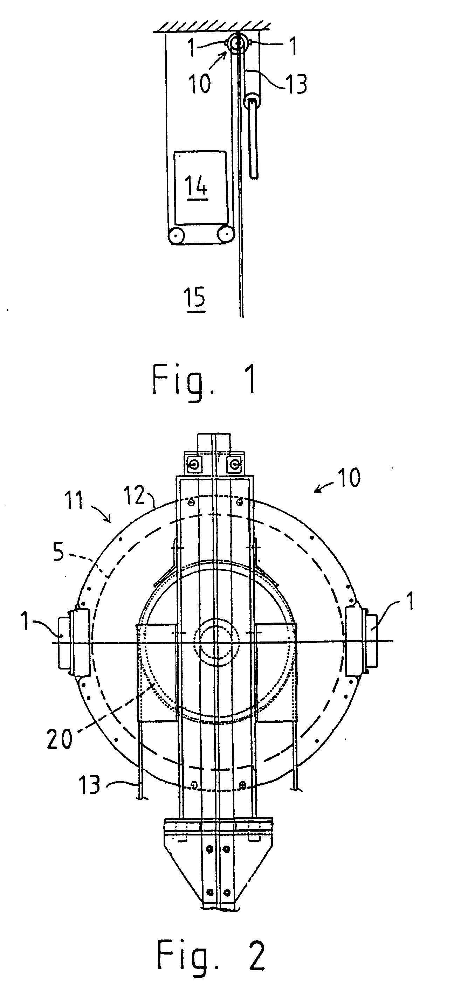

Fig. 1 presents a skeleton diagram of a traction sheave elevator and Fig. 2 presents its power unit 10.

The traction sheave elevator comprises a power unit 10. The power unit 10 comprises a motor 11, the frame 12 of which is attached to a fixed structure 13. The motor 11 drives a brake wheel 5 fitted inside the frame 12. The power transmission means 13 are disposed between the traction sheave 20 and the elevator car 14 for moving the elevator car in the elevator shaft 15. The brake wheel 5, which has a larger diameter than the traction sheave, is attached to the traction sheave 20 or mounted on the same shaft with it.

As shown in Fig. 2, two holding brakes 1 are attached to the motor frame, placed symmetrically on opposite sides of the brake wheel 5.

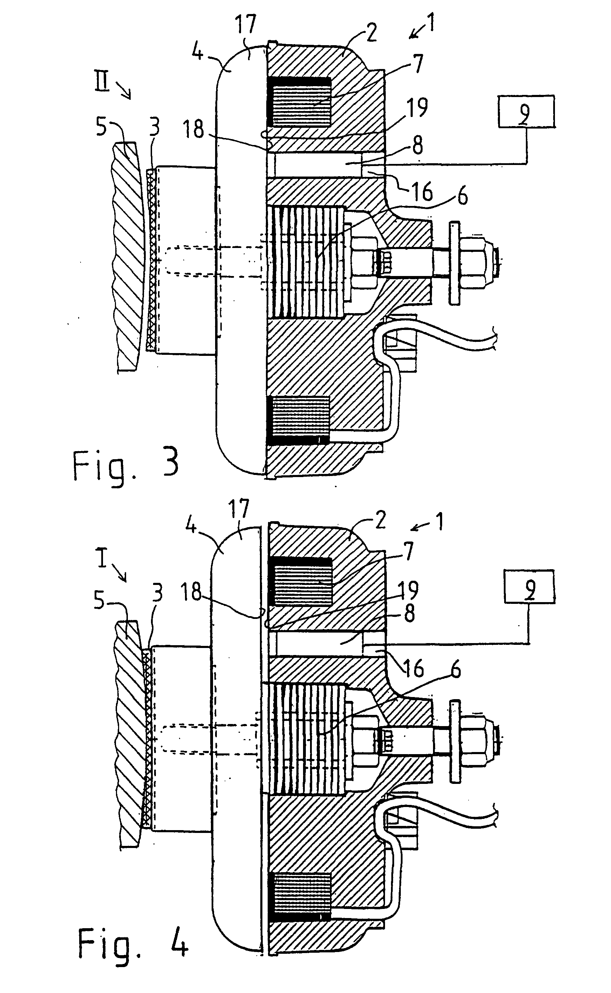

Figures 3 and 4 give a more detailed illustration of the structure and operation of the holding brake 1. The holding brake 1 comprises a brake body 2. The brake body 2 is fixed to the motor frame (not shown in the figure). Further, the holding brake comprises a brake pad 3, attached to a brake shoe 4. The brake shoe 4 is mounted on the brake body 2 in a manner allowing it to move between a braking position I (see Fig. 4) and a released position II (Fig. 3).

In the braking position I in Fig. 4, the brake pad 3 is in a braking frictional contact with the circumference of the brake wheel 5. In the released position II in Fig. 3, the brake pad 3 is clear of contact with the circumference of the brake wheel 5. A set of disk springs 6 applies a load on the brake shoe 4, continuously tending to move it towards the braking position I. When the electromagnetic actuator 7 is in an active state, it holds the brake shoe in the released position II. When the elevator is standing still, the spring load always keeps the holding brakes 1 in the braking position I.

The actuator 7 consists of a ring winding embedded in an ring-shaped recess in the brake body. To give a clear illustration of the operation, figures 3 and 4 exaggerate the travel of the brake shoe as compared with the actual situation, where the travel, i.e. the displacement of the brake shoe between positions I and II is less than 1 mm.

Furthermore, the holding brake comprises a displacement sensor 8 arranged to measure the displacement of the brake shoe 4 between the braking position I and the releasing position II. The displacement sensor 8 preferably measures the displacement without contact. The displacement sensor 8 may be an inductive, capacitive or optic distance sensor. The monitoring device 9 has been arranged to indicate the operational state and/or condition of the brake on the basis of the measured displacement.

The brake body 2 is provided with a through hole 16 in which the displacement sensor 8 is mounted. The brake shoe 4 comprises a flange 17 having a planar surface 18 against the stop face 19 of the brake body 2. The displacement sensor 8 measures the distance to the planar surface 18 of the flange 17. The stop face 19 and the planar flange surface 18 disposed oppositely to each other are practically not subject to wear, so the measured displacement is only dependent on the wear of the brake pad 3, the measured displacement increasing with the wear of the brake pad 3. The monitoring device 9 may be arranged to determine the degree of wear of the brake pad 3 on the basis of the measured displacement. In addition, the monitoring device 9 issues an alarm and prevents the use of the elevator if the measured displacement, i.e. wear of the brake pad exceeds a predetermined limit. Further, the monitoring device 9 may issue an alarm and prevent the use of the elevator if the displacement is insufficient. Such a situation may arise if the electromagnetic actuator 7 does not work, failing to pull the brake shoe 5 to the released position II, in which case the brake could be damaged if the elevator were to be moved. The monitoring device 9 may issue an alarm e.g. via any communication network, e.g. to any center, where the fault is registered and, if appropriate, causes a service visit to the place in question. In this context, communication networks, in addition to normal telephone and data networks, also refers to wireless networks, so the modern GSM technology can well be applied in issuing an alarm like this. The center in this system may be the client's or elevator company's normal maintenance center, a guarding agency or a public or private alarm center.

The invention is not restricted to the examples of its embodiments described above, but many variations are possible within the scope of the inventive idea defined in the claims.

## Claims

1. Holding brake (1) for a traction sheave elevator, comprising a brake body (2); a brake pad (3); a brake shoe (4), to which the brake pad (3) is attached, said brake shoe being mounted on the brake body so that it can move between a braking position (I), in which the brake pad is in braking contact with a rotating element connected to the power unit of the elevator, and a released position (II), in which the brake pad is clear of contact with the rotating element; a spring (6) arranged to apply to the brake shoe a load tending to move it to the braking position (I); and an electromagnetic actuator (7) arranged to keep the brake shoe in the released position (II) when activated, **characterized in that** independently of the electromagnetic actuator the holding brake comprises a displacement sensor (8) arranged to measure the displacement between the braking position (I) and the releasing position (II), and a monitoring device (9) arranged to indicate the operational state and/or condition of the brake on the basis of the measured displacement.

2. Holding brake as defined in claim 1, **characterized in that** the monitoring device (9) has been arranged to determine the degree of wear of the brake pad (3) on the basis of measured displacement.

3. Holding brake as defined in claim 1 or 2, **characterized in that** the monitoring device (9) has been arranged to issue an alarm and/or prevent the use of the elevator if the measured displacement exceeds a predetermined limit or if the displacement is insufficient.

4. Holding brake as defined in any one of the preceding claims, **characterized in that** the monitoring device (9) has been arranged to issue an alarm, transmit the information via a communication network to a center and/or to prevent the use of the elevator.

5. Holding brake as defined in any one of the preceding claims **characterized in that** the displacement sensor (8) is a displacement sensor working without contact.

6. Holding brake as defined in any one of the preceding claims **characterized in that** the displacement sensor (8) is an inductive displacement sensor.

7. Holding brake as defined in any one of the preceding claims **characterized in that** the displacement sensor (8) is a capacitive displacement sensor.

8. Holding brake as defined in any one of the preceding claims **characterized in that** the displacement sensor (8) is an optic displacement sensor.

## Patentansprüche

1. Haltebremse (1) für einen Treibscheibenaufzug; umfassend einen Bremskörper (2); einen Bremsbelag (3); einen Bremsschuh (4), an welchem der Bremsbelag (3) befestigt ist; welcher Bremsschuh an dem Bremskörper angebracht ist, so dass er sich zwischen einer Bremsposition I bewegen kann, in welcher der Bremsbelag im Bremskontakt mit einem, mit der Antriebseinheit des Aufzugs verbundenen rotierenden Element ist, und einer gelösten Position II, in welcher der Bremsbelag nicht im Kontakt mit dem rotierenden Element ist; einer Feder (6), welche angeordnet ist, um den Bremsschuh einer Beladung auszusetzen, welche ihn dazu anregt, sich in die Bremsposition I zu bewegen; und ein elektromagnetisches Betätigungselement (7), welches angeordnet ist, um, wenn es aktiviert ist, den Bremsschuh in der gelösten Position II zu halten, **dadurch gekennzeichnet, dass** die Haltebremse unabhängig von dem elektromagnetischen Betätigungselement einen Abstandssensor (8) umfasst, welcher angeordnet ist, um den Abstand zwischen der Bremsposition I und der Löseposition II zu messen und eine Kontrolleinrichtung (9), welche angeordnet ist, um den Betriebsstatus und/oder Zustand der Bremse auf der Basis des gemessenen Abstands anzuzeigen.

2. Haltebremse nach Anspruch 1, **dadurch gekennzeichnet, dass** die Kontrolleinrichtung (9) angeordnet wurde, um den Abnutzungsgrad des Bremsbelags (3) auf der Basis eines gemessenen Abstands zu bestimmen.

3. Haltebremse nach Anspruch 1 oder 2, **dadurch gekennzeichnet, dass** die Kontrolleinrichtung (9) angeordnet wurde, um einen Alarm abzugeben, und/oder die Benutzung des Aufzugs zu verhindern, wenn der gemessene Abstand eine vorher bestimmte Grenze überschreitet oder wenn der Abstand nicht ausreichend ist.

4. Haltebremse nach einem der vorhergehenden Ansprüche, **dadurch gekennzeichnet, dass** die Kontrolleinrichtung (9) angeordnet wurde, um einen Alarm abzugeben, die Information über ein Kommunikationsnetzwerk zu einer Zentrale zu übertragen und/oder die Benutzung des Aufzugs zu verhindern.

5. Haltebremse nach einem der vorgehenden Ansprüche, **dadurch gekennzeichnet, dass** der Abstandssensor (8) ein berührungslos arbeitender Abstandssensor ist.

6. Haltebremse nach einem der vorhergehenden Ansprüche, **dadurch gekennzeichnet, dass** der Abstandssensor (8) ein induktiver Abstandssensor ist.

7. Haltebremse nach einem der vorhergehenden Ansprüche, **dadurch gekennzeichnet, dass** der Abstandssensor (8) ein kapazitiver Abstandssensor ist.

8. Haltebremse nach einem der vorhergehenden Ansprüche, **dadurch gekennzeichnet, dass** der Abstandssensor (8) ein optischer Abstandssensor ist.

## Revendications

1. Un frein d'arrêt (1) pour un ascenseur à poulie de traction comprenant un corps de frein (2), une plaquette de frein (3), un patin de frein (4) auquel est fixé la plaquette de frein, ledit patin de frein étant monté sur le corps de frein de manière à pouvoir bouger entre une position de freinage (I) dans laquelle le patin de frein est en contact de freinage avec un élément de rotation relié à une unité de puissance de l'ascenseur, et une position relâchée (II) dans laquelle la plaquette de frein n'est pas en contact avec l'élément de rotation ; un ressort (6) disposé pour appliquer sur le patin de frein, une charge ayant tendance à bouger ledit patin dans la position de freinage (I) ; et un actuateur électromagnétique (7) disposé pour maintenir le patin de frein dans la position relâchée (II) lorsqu'il est activé, **caractérisé en ce qu'**indépendamment de l'actuateur électromagnétique, le frein d'arrêt comprend un capteur de déplacement (8) disposé pour mesurer le déplacement entre la position de freinage (I) et la position relâchée (II), et un dispositif de contrôle (9) disposé pour indiquer l'état de fonctionnement et / ou l'état du frein sur la base du déplacement mesuré.

2. Un frein d'arrêt comme défini dans la revendication 1, **caractérisé en ce que** le dispositif de contrôle (9) a été disposé afin de déterminer le degré d'usure du patin de frein (3) sur la base du déplacement mesuré.

3. Un frein d'arrêt comme défini dans la revendication 1 ou 2, **caractérisé en ce que** le dispositif de contrôle (9) a été disposé afin d'émettre un signal d'alarme et / ou d'empêcher l'utilisation d'un ascenseur si le déplacement mesuré dépasse une limite prédéterminée ou si le déplacement est insuffisant.

4. Un frein d'arrêt comme défini dans n'importe laquelle des revendications précédentes, **caractérisé en ce que** le dispositif de contrôle (9) a été disposé afin d'émettre un signal d'alarme, transmettre l'information via un réseau de communication vers un centre et / ou pour empêcher l'utilisation de l'ascenseur.

5. Un frein d'arrêt comme défini dans l'importe laquelle des revendications précédentes, **caractérisé en ce que** le capteur de déplacement (8) est un capteur de déplacement travaillant sans contact.

6. Frein d'arrêt comme défini dans n'importe laquelle des revendications précédentes, **caractérisé en ce que** le capteur de déplacement (8) est un capteur de déplacement à induction.

7. Un frein d'arrêt comme défini dans n'importe laquelle des revendications précédentes, **caractérisé en ce que** le capteur de déplacement (8) est un capteur capacitif de déplacement.

8. Un frein d'arrêt comme défini dans n'importe laquelle des revendications précédentes, **caractérisé en ce que** le capteur de déplacement (8) est un capteur optique de déplacement.
